# EUROPÄISCHE PATENTSCHRIFT

(11) **EP 2 824 348 B1**
(45) Veröffentlichungstag und Bekanntmachung des Hinweises auf die Patenterteilung: **14.02.2018**
(21) Anmeldenummer: 14175420.0
(22) Anmeldetag: 02.07.2014
(51) Int. Cl.: F16D 25/0638, F16D 25/12, F16D 13/52, F16D 13/72

(54) **Reibkupplung**
Friction clutch
Embrayage à friction

(30) Priorität: 05.07.2013 DE 102013213180
(43) Veröffentlichungstag der Anmeldung: 14.01.2015
(73) Patentinhaber: Schaeffler Technologies AG & Co. KG, 91074 Herzogenaurach (DE)
(72) Erfinder: Kühnle, Michael, 77815 Bühl (DE)

(56) Entgegenhaltungen:
- EP-A1- 1 703 159
- EP-A2- 1 174 633
- DE-A1- 10 125 628
- DE-A1-102010 053 929
- DE-T2- 69 403 135
- US-A- 3 366 210

## Beschreibung

Die Erfindung betrifft eine Reibkupplung umfassend eine Eingangsseite und eine Ausgangsseite, die drehbar um eine Drehachse angeordnet sind, sowie einen Nassraum, der mit einer Kühlflüssigkeit befüllbar ist, wobei in dem Nassraum ein erster Reibpartner, der mit der Eingangsseite drehmomentschlüssig verbunden ist, ein zweiter Reibpartner, der mit der Ausgangsseite drehmomentschlüssig verbunden ist, und eine Kompressionseinrichtung, die ausgebildet ist, eine axiale Kompression des ersten Reibpartners und des zweiten Reibpartners zur Erzeugung eines Drehmomentschlusses zwischen der Eingangsseite und der Ausgangsseite bereitzustellen, angeordnet sind.

Aus der DE 10 2012 208 579 A1 ist eine Drehmomentübertragungseinrichtung in einem Antriebsstrang eines Kraftfahrzeugs mit einer um eine Drehachse drehbaren und in einem Gehäuse aufgenommenen Kupplungseinrichtung mit einem Reibbereich zur reibschlüssigen Verbindung einer Antriebsseite mit einer Abtriebsseite und einer zur Zuführung von Fluid in das Gehäuse vorgesehenen ersten Durchlassöffnung und einer zum Abfluss von Fluid aus dem Gehäuse vorgesehenen zweiten Durchlassöffnung und einem die erste und zweite Öffnung passierenden und den Reibbereich durchströmenden ersten Kühlfluidstrom zur Kühlung des Reibbereichs bekannt, wobei der Reibbereich von einem zweiten Kühlfluidstrom durchströmt wird, der in dem Gehäuse zirkuliert, vorrangig unter Umgehung eines Durchtritts durch die erste und zweite Durchlassöffnung.

Aus der EP 1 174 633 A2 ist eine Reibkupplung bekannt, bei der eine radial außerhalb des Reibbereichs liegende Aufnahmeeinrichtung Fluid aufnimmt und nach radial innen befördert. Die EP 1 174 633 A2 zeigt den Oberbegriff des Patentanspruchs 1.

Es ist Aufgabe der Erfindung, eine verbesserte Reibkupplung bereitzustellen, die eine verbesserte Kühlung aufweist.

Diese Aufgabe wird mittels einer Reibkupplung gemäß Patentanspruch 1 gelöst. Vorteilhafte Ausführungsformen sind in den abhängigen Ansprüchen angegeben.

Erfindungsgemäß wurde erkannt, dass eine verbesserte Reibkupplung dadurch bereitgestellt werden kann, dass die Reibkupplung eine Eingangsseite und eine Ausgangsseite umfasst, die drehbar um eine Drehachse angeordnet sind. Ferner umfasst die Reibkupplung einen Nassraum, der mit einer Kühlflüssigkeit befüllbar ist. In dem Nassraum ist ein erster Reibpartner, der drehmomentschlüssig mit der Eingangsseite verbunden ist, und ein zweiter Reibpartner, der drehmomentschlüssig mit der Ausgangsseite verbunden ist, sowie eine Kompressionseinrichtung angeordnet, die ausgebildet ist, eine axiale Kompression des ersten Reibpartners und des zweiten Reibpartners zur Erzeugung eines Drehmomentschlusses zwischen der Eingangsseite und der Ausgangsseite bereitzustellen. Ferner ist in dem Nassraum eine Abbremseinrichtung für die Kühlflüssigkeit vorgesehen, die axial angrenzend an den ersten und/oder den zweiten Reibpartner angeordnet ist. Die Abbremseinrichtung ist ausgebildet, eine Umfangsgeschwindigkeit der Kühlflüssigkeit zu reduzieren.

Auf diese Weise wird gewährleistet, dass die Kühlflüssigkeit nach dem Austritt zwischen dem ersten und dem zweiten Reibpartner zügig in Umfangsgeschwindigkeit abgebremst wird und somit die Rückführung der Kühlflüssigkeit von radial außen nach radial innen gewährleistet wird. Dadurch kann eine Zirkulation der Kühlflüssigkeit innerhalb der Reibkupplung erhöht werden und somit eine beim Anfahren in die Reibkupplung eingebrachte Reibwärme zuverlässig aus den Reibpartnern abgeführt werden, um so zuverlässig eine Überhitzung der Reibpartner zu vermeiden. Ferner wird auch einem übermäßigen Verschleiß der Kühlflüssigkeit vorgebeugt. Dadurch kann insgesamt die Lebensdauer der Reibkupplung erhöht werden.

In einer weiteren Ausführungsform umfasst die Abbremseinrichtung eine Trägerscheibe. An der Trägerscheibe ist eine Bremsstruktur vorgesehen. Die Bremsstruktur ist dabei an einer dem ersten und/oder zweiten Reibpartner zugewandten Stirnseite der Trägerscheibe angeordnet. Auf diese Weise wird eine besonders in axialer Richtung kompakte Abbremseinrichtung bereitgestellt, so dass insgesamt die Reibkupplung einen geringen axialen Bauraum benötigt.

In einer weiteren Ausführungsform umfasst die Bremsstruktur wenigstens eine Schaufel. Die Schaufel ist dabei insbesondere schräg oder senkrecht zu einer Tangente an die Trägerscheibe angeordnet, so dass die Schaufel die Kühlflüssigkeit radial nach innen fördert. Dadurch kann besonders stark die Umfangsgeschwindigkeit der zwischen den Reibpartnern austretenden Kühlflüssigkeit reduziert werden und insbesondere, wenn die Schaufel schräg zu der Tangente an die Trägerscheibe angeordnet ist, die Kühlflüssigkeit mittels der Umfangsgeschwindigkeit besonders gut radial nach innen gefördert werden. Dadurch kann die Zirkulation der Kühlflüssigkeit innerhalb der Reibkupplung weiter erhöht werden. Erfindungsgemäß ist eine Kupplungseinrichtung vorgesehen, wobei die Kupplungseinrichtung wenigstens einen ersten und einen zweiten Schaltzustand umfasst. In dem ersten Schaltzustand verbindet die Kupplungseinrichtung die Abbremseinrichtung drehmomentschlüssig mit einer weiteren Komponente der Reibkupplung. In einem zweiten Schaltzustand rückt die Kupplungseinrichtung aus, um eine Drehmomentübertragung zwischen der Abbremseinrichtung und der weiteren Komponente zumindest teilweise zu unterbrechen. Auf diese Weise kann die Abbremseinrichtung gesteuert werden. Dadurch kann die Zirkulation der Kühlflüssigkeit je nach Betriebszustand der Reibkupplung und entsprechend der Belastung der Reibpartner gesteuert werden, so dass neben einem Betriebszustand mit hoher Zirkulation der Kühlflüssigkeit auch ein Betriebszustand mit geringer Zirkulation, bei der die Abbremseinrichtung z. B. frei im Strom der Kühlflüssigkeit mitläuft, bereitgestellt werden kann. Dadurch kann zum einen die Temperatur der Reibpartner gering gehalten werden und zum anderen der Wirkungsgrad der Reibkupplung erhöht werden.

In einer weiteren Ausführungsform ist die weitere Komponente die Ausgangsseite der Reibkupplung oder eine drehfeste Komponente eines Antriebsstrangs, insbesondere ein Leitradstutzen eines hydrodynamischen Wandlers. Dadurch kann eine besonders hohe Drehzahldifferenz zwischen der in Umfangsrichtung rotierenden Kühlflüssigkeit und der Abbremseinrichtung bereitgestellt werden, wodurch besonders effizient die Zirkulation der Kühlflüssigkeit innerhalb der Reibkupplung erhöht wird.

In einer weiteren Ausführungsform ist eine Steuereinrichtung vorgesehen, die ausgebildet ist, die Kupplungseinrichtung zur Schaltung der wenigstens zwei Schaltzustände anzusteuern.

Besonders vorteilhaft ist, wenn die Steuereinrichtung ausgebildet ist, eine Temperatur der Kühlflüssigkeit und/oder wenigstens eines Reibpartners und/oder einen Verfahrweg der Kompressionseinrichtung zu erfassen, wobei bei einem Überschreiten oder Unterschreiten eines vordefinierten Schwellenwerts der erfassten Temperatur der Kühlflüssigkeit und/oder des wenigstens einen Reibpartners und/oder des Verfahrwegs, die Steuereinrichtung die Kupplungseinrichtung zum Wechsel des Schaltzustands der Kupplungseinrichtung ansteuert. Dadurch kann das Betriebsverhalten der Reibkupplung, insbesondere der Zirkulation der Kühlflüssigkeit innerhalb der Reibkupplung auf einfache Weise an den jeweiligen Betriebszustand der Reibkupplung angepasst werden.

In einer weiteren Ausführungsform umfasst die Steuereinrichtung eine Zeitmesseinrichtung, wobei die Zeitmesseinrichtung ausgebildet ist, bei Überschreiten des Schwellenwerts eine Zeiterfassung zu starten und wobei die Steuereinrichtung ausgebildet ist, bei Ablauf eines durch die Zeitmesseinrichtung erfassten vordefinierten Zeitintervalls die Kupplungseinrichtung zum Wechsel des Schaltzustands der Kupplungseinrichtung anzusteuern. Auf diese Weise wird gewährleistet, dass die Reibkupplung, nachdem bei dem Überschreiten des Schwellenwerts die Kupplungseinrichtung vom ersten Schaltzustand in den zweiten Schaltzustand wechselte, nach Ablauf des vordefinierten Zeitintervalls wieder in den ersten Schaltzustand zurückwechselt und somit die Reibkupplung ein einheitliches Betriebsverhalten aufweist.

In einer weiteren Ausführungsform weist die Kompressionseinrichtung einen ersten Druckkolben und einen vom ersten Druckkolben begrenzten ersten Druckraum auf. Die Kupplungseinrichtung weist einen zweiten Druckkolben auf, der einen zweiten Druckraum begrenzt. Der erste und der zweite Druckraum sind mit einem Drucköl befüllbar. Der zweite Druckkolben ist ausgebildet, mittels des Drucköls verschoben zu werden, um einen Drehmomentschluss zwischen der Abbremseinrichtung und der weiteren Komponente bereitzustellen. Der erste und der zweite Druckraum sind fluidisch über einen Verbindungskanal verbunden. Insbesondere ist in dem Verbindungskanal ein Steuerventil der Steuereinrichtung angeordnet, das ausgebildet ist, den Verbindungskanal zu öffnen und zu schließen, wobei insbesondere das Steuerventil als temperatursensitives Ventil ausgebildet ist. Auf diese Weise wird gewährleistet, dass durch die fluidische Verbindung über den Verbindungskanal die Kupplungseinrichtung synchron mit der Kompressionseinrichtung gesteuert wird. So kann beispielsweise im ersten Schaltzustand die Kupplungseinrichtung drehmomentschlüssig mit der Ausgangsseite verbunden sein. Die Kompressionseinrichtung stellt den Drehmomentschluss zwischen der Eingangs- und Ausgangsseite bei Druckbeaufschlagung mit dem Drucköl bereit. Gleichzeitig wird dabei die Kupplungseinrichtung ausgerückt, so dass die Abbremseinrichtung sich frei mit der Kühlflüssigkeit drehen kann. Dadurch wird während des Einkuppelns die Kühlflüssigkeit durch die Abbremseinrichtung abgebremst und gleichzeitig eine hohe Zirkulation bereitgestellt, während hingegen im eingekuppelten Zustand der Reibkupplung der Wirkungsgrad der Reibkupplung durch eine Reduktion der Zirkulation, da die Abbremseinrichtung ausgekuppelt ist, erhöht ist.

In einer weiteren Ausführungsform umfasst die Kompressionseinrichtung einen Kolben und einen Druckraum, der durch den Kolben begrenzt wird. Der Druckraum ist mit einem Drucköl befüllbar, um den Kolben axial zu verschieben und die Reibpartner axial zu komprimieren, wobei der Kolben stirnseitig auf einer dem Druckraum abgewandten Stirnseite ein Verbindungselement aufweist, das die Kupplungseinrichtung mit dem Kolben koppelt, wobei bei einer axialen Verschiebung des Kolbens der Kompressionseinrichtung die Kupplungseinrichtung betätigt wird. Auf diese Weise kann eine einfache mechanische Kopplung zwischen der Kompressionseinrichtung und der Kupplungseinrichtung bereitgestellt werden, um die Kupplungseinrichtung über die Kompressionseinrichtung anzusteuern.

Nachfolgend wird die Erfindung anhand von Figuren näher erläutert. Dabei zeigen:
- Fig. 1: einen Längsschnitt durch eine Reibkupplung gemäß einer ersten Ausführungsform mit einer Abbremseinrichtung;
- Fig. 2: eine Draufsicht auf die in Fig. 1 gezeigte Abbremseinrichtung;
- Fig. 3: einen Längsschnitt durch die in Fig. 2 gezeigte Abbremseinrichtung;
- Fig. 4: einen Querschnitt durch die in Fig. 3 gezeigte Abbremseinrichtung entlang einer in Fig. 3 gezeigten Schnittebene B-B;
- Fig. 5: eine Reibkupplung gemäß einer zweiten Ausführungsform; und
- Fig. 6: eine Reibkupplung gemäß einer dritten Ausführungsform.

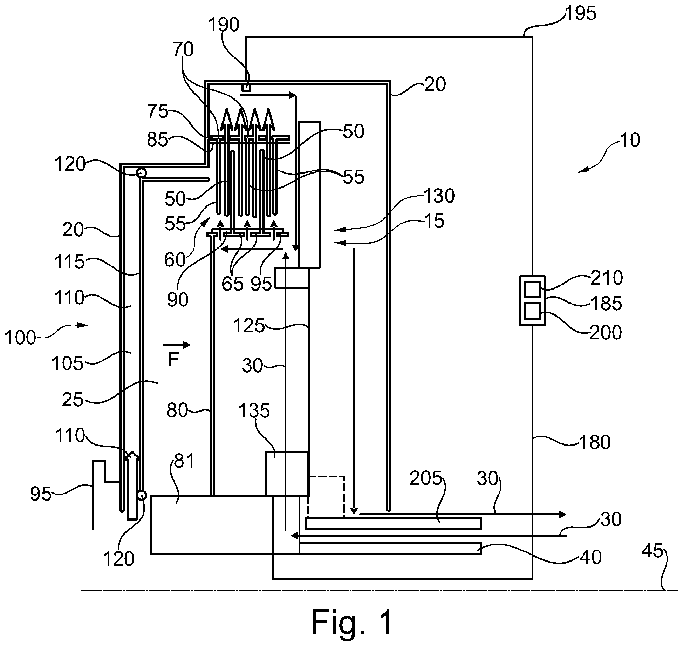

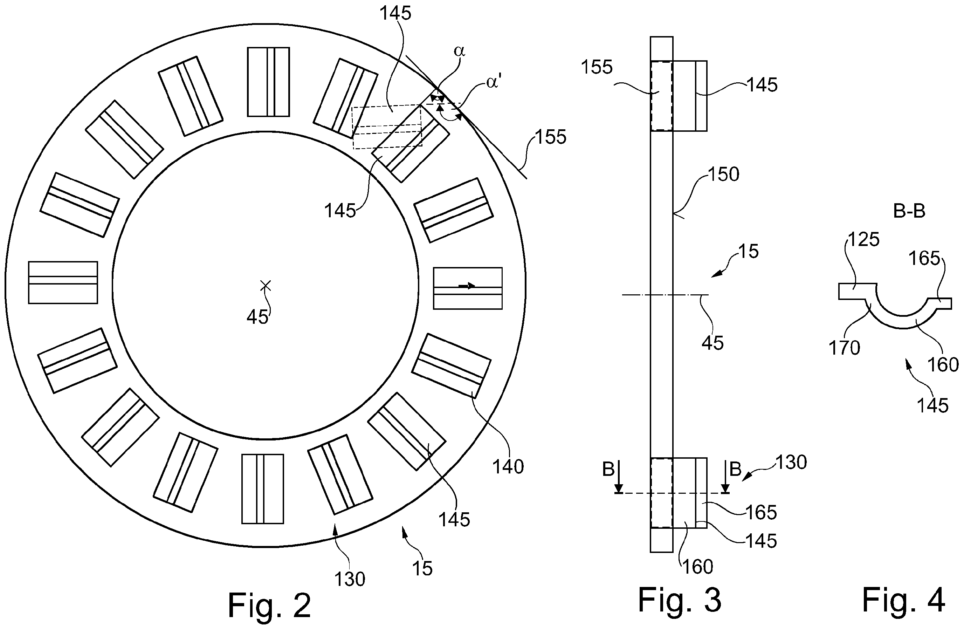

Fig. 1 zeigt einen Längsschnitt durch eine Reibkupplung 10 mit einer Abbremseinrichtung 15. Fig. 2 zeigt eine Draufsicht auf die in Fig. 1 gezeigte Abbremseinrichtung 15 und Fig. 3 zeigt einen Längsschnitt durch die in Fig. 2 gezeigte Abbremseinrichtung 15. Fig. 4 zeigt einen Querschnitt durch die in Fig. 3 gezeigte Abbremseinrichtung entlang einer in Fig. 3 gezeigten Schnittlinie B-B. Nachfolgend sollen die Fign. 1 bis 4 zusammen erläutert werden, wobei gleiche Bauteile mit gleichen Bezugszeichen bezeichnet werden.

Die Reibkupplung 10 umfasst ein Kupplungsgehäuse 20. Das Kupplungsgehäuse 20 begrenzt innenseitig einen Nassraum 25, in dem eine Kühlflüssigkeit 30, vorzugsweise ein Kühlöl, vorgesehen ist. In der Ausführungsform ist der Nassraum 25 vollständig mit der Kühlflüssigkeit 30 geflutet. Selbstverständlich ist auch denkbar, dass der Nassraum 25 nur teilweise mit Kühlflüssigkeit 30 geflutet ist.

Die Reibkupplung 10 umfasst eine Eingangsseite 35 und eine Ausgangsseite 40. Dabei kann die Eingangsseite 35 beispielsweise mit einem Antriebsmotor, insbesondere einem Verbrennungsmotor eines Kraftfahrzeugs, drehmomentschlüssig verbunden werden. An der Ausgangsseite 40 kann beispielsweise ein Getriebe eines Kraftfahrzeugs angeordnet werden. Die Reibkupplung 10 ist drehbar um eine Drehachse 45.

In dem Nassraum 25 sind ferner erste Reiblamellen 50 abwechselnd mit zweiten Reiblamellen 55 in einem Lamellenpaket 60 axial angrenzend zueinander angeordnet. Die ersten Reiblamellen 50 weisen dabei eine Innenverzahnung 65 auf. Die zweiten Reiblamellen 55 weisen eine Außenverzahnung 70 auf. Ferner ist in dem Nassraum 25 ein Außenlamellenträger 75 und ein Innenlamellenträger 80 vorgesehen. Der Außenlamellenträger 75 ist dabei mit dem Kupplungsgehäuse 20 verbunden. Der Innenlamellenträger 80 ist mit einer Nabe 81 verbunden. Die Nabe 81 ist dabei mit der Ausgangsseite 40 verbunden, während das Kupplungsgehäuse 20 als Eingangsseite 35 der Reibkupplung 10 dient.

Der Außenlamellenträger 75 umfasst eine Innenverzahnung 85 und der Innenlamellenträger 80 umfasst eine Außenverzahnung 90. In die Außenverzahnung 90 des Innenlamellenträgers 80 greift die Innenverzahnung 65 der ersten Reiblamelle 50 ein und verbindet die erste Reiblamelle 50 drehmomentschlüssig mit dem Innenlamellenträger 80. In die Innenverzahnung 85 des Außenlamellenträgers 75 greift die Außenverzahnung 70 der zweiten Reiblamelle 55 ein und verbindet die zweite Reiblamelle 55 drehmomentschlüssig mit dem Außenlamellenträger 75. Durch die jeweiligen Außen- und Innenverzahnungen 65, 70, 85, 90 an den Reiblamellen 50, 55 bzw. dem Innenlamellenträger 80 bzw. dem Außenlamellenträger 75 sind die Reiblamellen 50, 55 in axialer Richtung verschiebbar.

Um eine radiale Durchströmung des Lamellenpakets 60 mit Kühlflüssigkeit 30 zu ermöglichen, sind in dem Innenlamellenträger 80 und in dem Außenlamellenträger 75 jeweils Öffnungen 95 im Bereich der Verzahnungen 85, 90 vorgesehen, durch die die Kühlflüssigkeit 30 von radial innen nach außen den Innenlamellenträger 80 bzw. den Außenlamellenträger 75 durchströmen kann.

Ferner ist in dem Nassraum 25 eine Kompressionseinrichtung 100 vorgesehen, die in Fig. 1 linksseitig axial angrenzend an das Lamellenpaket 60 angeordnet ist. Die Kompressionseinrichtung 100 umfasst einen Druckraum 105, der mit einem Drucköl 110 befüllbar ist. Der Druckraum 105 wird durch das Kupplungsgehäuse 20 und durch einen Kolben 115 begrenzt. Um den Druckraum 105 fluidisch vom Nassraum 25 zu trennen, sind ferner Dichtelemente 120 vorgesehen, die zwischen dem Kupplungsgehäuse 20 und dem Kolben 115 angeordnet sind. Wird der Druckraum 105 mit dem Drucköl 110 befüllt bzw. das Drucköl 110 unter Druck gesetzt, so wird der Kolben 115 in axialer Richtung in Richtung des Lamellenpakets 60 verschoben. Dabei komprimiert der Kolben 115 die Reiblamellen 50, 55 mit einer Druckkraft F, so dass diese in Wirkverbindung zueinander treten. Dadurch entsteht ein Reibschluss zwischen den ersten Reiblamellen 50 und den zweiten Reiblamellen 55, die die Eingangsseite 35 drehmomentschlüssig mit der Ausgangsseite 40 verbinden. Bei dem Reibschluss wird durch die Reibung der Reiblamellen 50, 55 aneinander Wärme in die Reiblamellen 50, 55 eingebracht.

Die stärkste Zirkulation von Kühlflüssigkeit zur Kühlung der Reiblamellen 50, 55 wird bei maximaler Drehzahldifferenz, also wenn die Ausgangsseite 40 steht und die Eingangsseite 35 rotiert, erzeugt. Dabei saugen die mit Eingangsdrehzahl rotierenden ersten Reiblamellen 50 die Kühlflüssigkeit 30 durch die Öffnungen 95 des Innenlamellenträgers 80 radial innenseitig an. Um die Kühlflüssigkeit 30 durch das Lamellenpaket 60 radial nach außen zu fördern bzw. anzusaugen, können die Reiblamellen Nuten in ihren (nicht dargestellten) Reibbelägen aufweisen. Die Kühlflüssigkeit durchströmt das Lamellenpaket 60 radial von innen nach außen hin und tritt radial außenseitig aus dem Lamellenpaket 60 aus. Die Kühlflüssigkeit 30 nimmt dabei die entstehende Wärme aus dem Lamellenpaket 60 auf. Dadurch kann eine Überhitzung der Reiblamellen 50, 55 vermieden werden. Die Kühlflüssigkeit 30 strömt nach Verlassen des Lamellenpakets 60 radial nach außen durch die Öffnungen 95 des Außenlamellenträgers 75. Das Kupplungsgehäuse 20 lenkt die radial nach außen strömende Kühlflüssigkeit 30 in axialer Richtung um, in Fig. 1 nach rechts, so dass die Kühlflüssigkeit 30 axial innenseitig am Kupplungsgehäuse 20 in Richtung der Abbremseinrichtung 15 strömt.

Die Abbremseinrichtung 15 für die Kühlflüssigkeit 30 ist direkt angrenzend in axialer Richtung an das Lamellenpaket 60 angeordnet und umfasst eine Trägerscheibe 125 mit einer Bremsstruktur 130. Die Bremsstruktur 130 ist dabei radial außenseitig im Wesentlichen auf radialer Höhe des Lamellenpakets 60 an der Trägerscheibe 125 angeordnet. Die Trägerscheibe 125 ist radial innenseitig über eine Kupplungseinrichtung 135 befestigt. Die Kupplungseinrichtung 135 verbindet dabei die Abbremseinrichtung 15 mit der Ausgangsseite 40 der Reibkupplung 10.

Die Bremsstruktur 130 (vgl. Fign. 2 und 3) umfasst eine Vielzahl in regelmäßigen Abständen in Umfangsrichtung verteilte Ausnehmungen 140 und an der Ausnehmung 140 angeordnete Schaufeln 145. Die Schaufeln 145 erstrecken sich dabei in axialer Richtung hin zum Lamellenpaket 60. Die Ausnehmungen 140 entstehen dadurch, dass die Schaufeln 145 in einem Stanzbiegeprozess aus der Trägerscheibe 125 ausgestanzt und in axialer Richtung gebogen werden. Die Schaufeln 145 der Abbremseinrichtung 15 dienen dazu, eine Umfangsgeschwindigkeit der Kühlflüssigkeit 30 aufgrund einer Drehzahldifferenz zwischen Kühlflüssigkeit und der Abbremseinrichtung 15 zu reduzieren. Wird die Umfangsgeschwindigkeit der Kühlflüssigkeit 30 reduziert, so wirken auf die Kühlflüssigkeit 30 reduzierte Fliehkräfte, so dass die Kühlflüssigkeit 30 auf einfache Weise radial von außen nach innen entlang einer dem Lamellenpaket 60 zugewandten Stirnseite 150 der Trägerscheibe 125 der Abbremseinrichtung 15 geführt werden kann. Dabei wird die Kühlflüssigkeit 30 durch die radial durch das Lamellenpaket 60 strömende Kühlflüssigkeit radial nach innen gesaugt.

Die Schaufeln 145 sind in der Ausführungsform senkrecht zu einer Tangente 155 der Trägerscheibe 125 ausgerichtet und schließen somit zu der Tangente 155 einen rechten Winkel α ein. Selbstverständlich ist auch denkbar, dass die Schaufeln 145, wie in Fig. 2 strichliert dargestellt, schräg zu der Tangente 155 unter einem Winkel α' > 90° ausgerichtet sind, so dass die Kühlflüssigkeit 30 aufgrund ihrer Umfangsgeschwindigkeit radial von außen nach innen durch die Schaufeln 145 gefördert wird. Dabei sind die Schaufeln schräg in Richtung der Drehrichtung der Kühlflüssigkeit 30 geneigt. Auf diese Weise kann eine besonders hohe Zirkulation von Kühlflüssigkeit 30 bzw. eine hohe Strömungsgeschwindigkeit von radial außen nach innen an der Abbremseinrichtung 15 bereitgestellt werden.

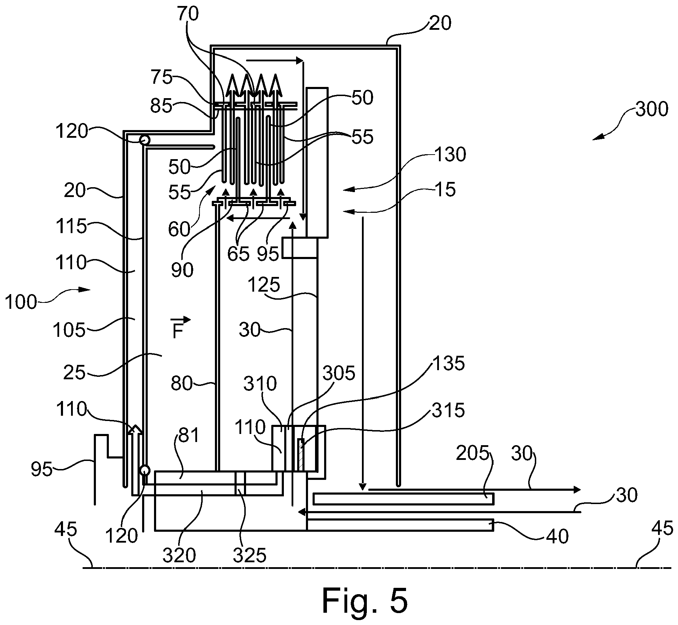

Dabei weist die Schaufel 145 zu der Tangente 155 einen Winkel α' von vorzugsweise wenigstens 120° auf. Aufgrund der schrägen Anordnung und der geringeren Drehzahl wird die Kühlflüssigkeit 30 aufgrund ihrer eigenen Umfangsgeschwindigkeit gegen die Schaufeln 145 gedrückt und durch die Schaufeln 145 nach radial innen geführt. Die Schaufeln 145 sind dabei derart ausgestaltet, dass die Kühlflüssigkeit 30 vor allem radial nach innen strömt. Eine Durchströmung der Kühlflüssigkeit 30 durch die Ausnehmungen 140 wird durch das Schaufelprofil (vgl. Fig. 5) vermieden.

Dabei umfasst das Schaufelprofil der Schaufel 145 einen halbkreisförmigen Abschnitt 160, der an einem festen Ende der Schaufel 145 angeordnet ist, und einen am freien Ende der Schaufel 145 angeordneten geraden Abschnitt 165. Der halbkreisförmige Abschnitt 160 ist somit an einem festen Ende 170 mit der Trägerscheibe 125 verbunden. Durch den halbkreisförmigen Abschnitt 160 wird der axiale Durchtritt durch die Ausnehmungen 140 vermieden und gleichzeitig ein hoher Strömungswiderstand der in Umfangsrichtung rotierenden Kühlflüssigkeit 30 entgegengestellt. Durch die Geschwindigkeitsreduktion in Umfangsrichtung werden die auf die Kühlflüssigkeit 30 wirkenden Fliehkräfte reduziert. Da die mit der Eingangsseite 35 gekoppelten ersten Reiblamellen 50 die Kühlflüssigkeit 30 radial innenseitig ansaugen, kann die Kühlflüssigkeit 30 entlang der Abbremseinrichtung 15 radial verbessert nach innen nachströmen.

Nachdem die Kühlflüssigkeit 30 radial von außen nach innen über die Abbremseinrichtung 15 geführt wurde, strömt die Kühlflüssigkeit 30 radial innenliegend in axialer Richtung entlang einem parallel zur Drehachse 45 verlaufenden Abschnitt des Innenlamellenträgers 80. Durch die rotierenden Reiblamellen 50, 55 wird die Kühlflüssigkeit 30 abermals durch die Öffnungen 95 angesaugt, so dass die Kühlflüssigkeit 30 nochmals durch das Lamellenpaket 60 zirkuliert und der Kühlflüssigkeitskreislauf geschlossen ist.

Die Kupplungseinrichtung 135 umfasst einen ersten Schaltzustand und einen zweiten Schaltzustand. In dem ersten Schaltzustand ist die Kupplungseinrichtung 135 ausgerückt, so dass die Trägerscheibe 125 im Wesentlichen frei drehbar ist und nicht drehmomentschlüssig mit der Ausgangsseite verbunden ist. In dem zweiten Schaltzustand ist die Kupplungseinrichtung 135 geschlossen und die Trägerscheibe 125 drehmomentschlüssig mit der Ausgangsseite 40 verbunden.

Die Kupplungseinrichtung 135 ist über eine erste Verbindung 180 mit einer Steuereinrichtung 185 verbunden. Die Kupplungseinrichtung 135 ist in der Ausführungsform als elektrische schaltbare Kupplung ausgebildet. Auf diese Weise kann die Steuereinrichtung 185 auf einfache Weise die Kupplungseinrichtung 135 betätigen. Ferner ist in dem Nassraum 25 ein Temperatursensor 190 zur Erfassung der Temperatur der Kühlflüssigkeit 30 vorgesehen, der beispielsweise radial außenseitig zu dem Lamellenpaket 60 angeordnet ist. Der Temperatursensor 190 ist über eine zweite Verbindung 195 mit der Steuereinrichtung 185 verbunden. Der Temperatursensor 190 stellt der Steuereinrichtung 185 ein Temperatursignal in Abhängigkeit der Temperatur der Kühlflüssigkeit bereit. Die Steuereinrichtung 185 umfasst ferner einen Speicher 200, in dem ein vordefinierter Schwellenwert hinterlegt ist. Die Steuereinrichtung 185 erfasst das Temperatursignal des Temperatursensors 190. Die Steuereinrichtung 185 vergleicht das erfasste Temperatursignal mit dem im Speicher 200 hinterlegten vordefinierten Schwellenwert für das Temperatursignal. Überschreitet das Temperatursignal des Temperatursensors 190 den vordefinierten Schwellenwert, so steuert die Steuereinrichtung 185 über die erste Verbindung 180 die Kupplungseinrichtung 135 an, um von dem ersten Schaltzustand der Kupplungseinrichtung 135 in den zweiten Schaltzustand zu wechseln. Die Kupplungseinrichtung 135 kuppelt beispielsweise in den zweiten Schaltzustand ein und verbindet drehmomentschlüssig die Trägerscheibe 125 mit der Ausgangsseite 40. Somit rotiert die Trägerscheibe 125, aber auch die Abbremseinrichtung 15 im zweiten Schaltzustand mit Ausgangsdrehzahl. Dadurch wird eine hohe Drehzahldifferenz zwischen der Kühlflüssigkeit 30 und der Abbremseinrichtung 15 bereitgestellt, so dass diese besonders stark die Kühlflüssigkeit 30 in Umfangsrichtung abbremst und radial nach innen führt. Dadurch wird die Zirkulation der Kühlflüssigkeit 30 im Lamellenpaket 60 erhöht und eine verstärkte Kühlung durch die Kühlflüssigkeit 30 im Lamellenpaket 60 bereitgestellt.

Im ersten Schaltzustand ist die Kupplungseinrichtung 135 ausgerückt, so dass die Trägerscheibe 125 und die daran angeordnete Abbremseinrichtung 15 frei in dem Nassraum 25 rotieren kann. Die Rotationsgeschwindigkeit der Abbremseinrichtung 15 orientiert sich dabei an der Umfangsgeschwindigkeit der Kühlflüssigkeit 30, so dass die Abbremseinrichtung 15 nur eine geringe Drehzahldifferenz zur Kühlflüssigkeit 30 aufweist, und somit nur eine geringe Zirkulation innerhalb der Reibkupplung 10 zur Kühlung des Lamellenpakets 60 bereitgestellt wird. Dadurch werden die Schleppmomente an der Abbremseinrichtung 15 gering gehalten. Dadurch wird der Wirkungsgrad der Reibkupplung 10 erhöht.

In der Ausführungsform ist die Kupplungseinrichtung 135 drehmomentschlüssig mit der Ausgangsseite 40 verbunden. Alternativ ist auch denkbar, dass die Kupplungseinrichtung 135 drehmomentschlüssig mit einem Leitradstutzen 205 eines hydrodynamischen Wandlers verbunden ist. Diese Ausführungsform ist in Fig. 1 strichliert dargestellt. Die Verbindung mit dem Leitradstutzen 205 des hydrodynamischen Wandlers hat den Vorteil, dass der Leitradstutzen 205 standardmäßig beim Anschluss der Reibkupplung 10 an ein Automatikgetriebe vorhanden ist. Der Leitradstutzen 205 ist eine Komponente des Wandlers, die drehfest ist und somit nicht um die Drehachse 45 rotiert. Durch die Verbindung der Kupplungseinrichtung 135 mit dem Leitradstutzen 205 kann die Abbremseinrichtung 15 im zweiten Schaltzustand vollständig abgebremst und stillgelegt werden, so dass somit eine besonders hohe Zirkulation der Kühlflüssigkeit 30 zur Kühlung des Lamellenpakets 60 bereitgestellt werden. Dies trifft für jeden Betriebszustand der Reibkupplung 10 zu, solange der Verbrennungsmotor die Eingangsseite 35 antreibt und die Reibkupplung 10 mit diesem verbunden ist.

Zusätzlich kann die Steuereinrichtung 185 eine Zeiterfassungseinrichtung 210 umfassen. In dem Speicher 200 ist ein vordefiniertes Zeitintervall hinterlegt, wobei der Speicher 200 das vordefinierte Zeitintervall der Zeiterfassungseinrichtung 210 bereitstellt. Die Zeiterfassungseinrichtung 210 ist dabei ausgebildet, ein Ablaufen des vordefinierten Zeitintervalls zu ermitteln. Die Zeiterfassungseinrichtung 210 startet eine Zeiterfassung zur Ermittlung des ablaufenden Zeitintervalls, wenn das Temperatursignal den im Speicher 200 abgelegten Schwellenwert für die Temperatur überschreitet und die Steuereinrichtung 185 die Kupplungseinrichtung vom ersten in den zweiten Schaltzustand schaltet. Als besonders vorteilhaft hat sich ein vordefiniertes Zeitintervall von 5 bis 10 Sekunden herausgestellt. Nach Ablauf des vordefinierten Zeitintervalls signalisiert dies die Zeiterfassungseinrichtung 210 der Steuereinrichtung 185, worauf diese die Kupplungseinrichtung 135 zum Wechseln vom zweiten in den ersten Schaltzustand ansteuert. Auf diese Weise wird gewährleistet, dass die Abbremseinrichtung 15 dauerhaft hauptsächlich frei in der Zirkulation der Kühlflüssigkeit 30 mit rotiert und sich die Kupplungseinrichtung 135 im ersten Schaltzustand befindet. Dabei ist die Zirkulation auf thermisch hochbelasteten Betriebszuständen der Reibkupplung 10 reduziert. Auf diese Weise weist die Reibkupplung 10 einen hohen Wirkungsgrad bei gleichzeitig geringer Überhitzungsempfindlichkeit auf.

Fig. 5 zeigt einen Längsschnitt durch eine Reibkupplung 300 gemäß einer zweiten Ausführungsform. Die Reibkupplung 300 ist im Wesentlichen identisch zu der in den Fign. 1 bis 4 gezeigten Reibkupplung 10 ausgebildet. Abweichend dazu weist die Kupplungseinrichtung 135 einen Kolben 305 auf. Der Kolben 305 begrenzt einen Druckraum 310 der Kupplungseinrichtung 135. Ferner ist eine Reibfläche 315 in der Kupplungseinrichtung 135 vorgesehen, die an einem Absatz 316 der Nabe 81 auf einer der Trägerscheibe 125 zugewandten Seite angeordnet ist. Die Trägerscheibe 125 ist zwischen dem Kolben 305 der Kupplungseinrichtung 135 und der Reibfläche 315 angeordnet. Der Druckraum 310 der Kupplungseinrichtung 135 ist über einen Verbindungskanal 320 mit dem Druckraum 105 der Kompressionseinrichtung 100 fluidisch verbunden. Sowohl der Druckraum 310 der Kupplungseinrichtung 135 als auch der Druckraum 105 der Kompressionseinrichtung 100 sind mit dem Drucköl 110 befüllt.

Wird die Reibkupplung 300 betätigt und das Drucköl 110 im Druckraum 105 der Kompressionseinrichtung 100 mit Drucköl 110 beaufschlagt, so wird nicht nur der Kolben 115 der Kompressionseinrichtung 100, sondern auch der Kolben 305 der Kupplungseinrichtung 135 axial in Richtung der Abbremseinrichtung 15 verschoben. Dabei drückt der Kolben 305 der Kupplungseinrichtung 135 die Trägerscheibe 125 beispielhaft an die Reibfläche 315 an. Dadurch wird die Trägerscheibe 125 drehmomentschlüssig mit der Ausgangsseite 40 verbunden. Die Kupplungseinrichtung 135 rückt aus, wenn das Drucköl 110 nicht mehr mit Druck beaufschlagt wird. Dadurch kann dann die Trägerscheibe 125 bzw. die Abbremseinrichtung 15 wieder frei entsprechend der Zirkulation der Kühlflüssigkeit 30 im Nassraum 25 um die Drehachse 45 rotieren.

Zusätzlich kann in dem Verbindungskanal 320 ein Steuerventil 325 vorgesehen sein, das den Verbindungskanal 320 öffnet oder schließt. Das Steuerventil 325 kann beispielsweise mit der in Fig. 1 gezeigten Steuereinrichtung verbunden sein und durch diese betätigt werden.

Alternativ kann das Steuerventil 325 beispielsweise auch als temperatursensitives Ventil ausgebildet sein, das bei Überschreiten eines vordefinierten Schwellenwerts einer Temperatur der Kühlflüssigkeit 30 den Verbindungskanal 320 öffnet und somit einen Übertritt des Drucköls 110 aus dem Druckraum 105 der Kompressionseinrichtung 100 in den Druckraum 310 der Kupplungseinrichtung 135 ermöglicht. Bei einem Abkühlen der Temperatur der Kühlflüssigkeit 30 schließt das temperatursensitive Steuerventil 325 den Verbindungskanal 320 und trennt somit den Druckraum 105 der Kompressionseinrichtung 100 von dem Druckraum 310 der Kupplungseinrichtung 135. Dadurch wird bei Betätigung der Kompressionseinrichtung 100 die Kupplungseinrichtung 135 nicht betätigt und somit der Schaltzustand der Kupplungseinrichtung 135 bei einer zu niedrigen Temperatur der Kühlflüssigkeit 30 nicht gewechselt.

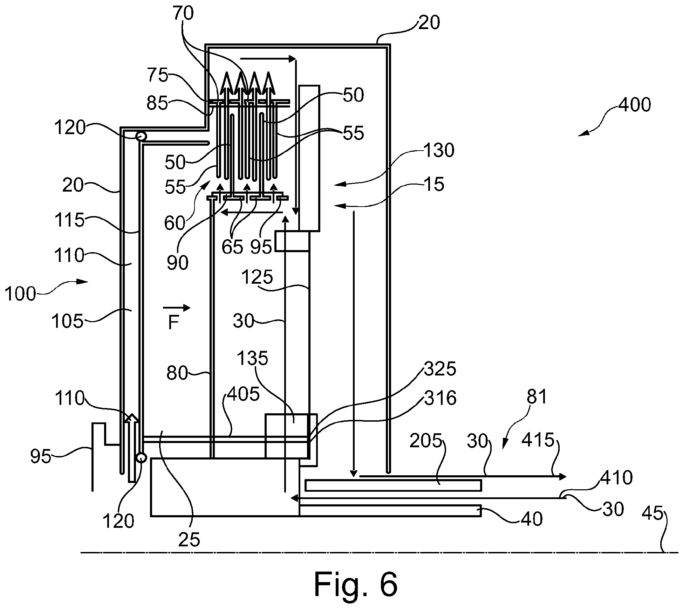

Fig. 6 zeigt einen Längsschnitt durch eine Reibkupplung 400 gemäß einer dritten Ausführungsform. Die Reibkupplung 400 entspricht im Wesentlichen den in den Fig. 1 bis 5 gezeigten Reibkupplungen 10, 300. Abweichend dazu ist jedoch an dem Kolben 115 der Kompressionseinrichtung 100 ein Steg 405 vorgesehen, der die Kupplungseinrichtung 135 mit der Kompressionseinrichtung 100 mechanisch koppelt. Wird der Kolben 115 durch die Druckbeaufschlagung des Drucköls 110 in Fig. 1 nach rechts verschoben, so wird über den Steg 405 die Kupplungseinrichtung 135 ebenso betätigt bzw. die Trägerscheibe 125 an den Reibfläche 315 der Kupplungseinrichtung 135 gepresst, so dass der Schaltzustand der Kupplungseinrichtung 135 gewechselt wird und die Kupplungseinrichtung 135 geschlossen ist. Auf diese Weise kann eine einfache mechanische Kopplung über den Verfahrweg des Kolbens 115 zur Betätigung der Kupplungseinrichtung 135 mittels der Kompressionseinrichtung 100 bereitgestellt werden.

Die oben gezeigten Ausführungsformen haben alle gemeinsam, dass durch die Bereitstellung der Kupplungseinrichtung 135 die Abbremseinrichtung 15 gesteuert werden kann und somit je nach Betriebszustand der Reibkupplung 10 die Zirkulation der Kühlflüssigkeit 30 zur Kühlung des Lamellenpakets 60 auf einfache Weise gesteuert werden kann.

Die Ausgestaltungen der Kupplungseinrichtung 135 sind beispielhaft. Selbstverständlich kann auch die Kupplungseinrichtung 135 andersartig ausgebildet sein und/oder die oben gezeigten Merkmale miteinander kombiniert werden. Auch ist denkbar, dass die Ansteuerung der Kupplungseinrichtung 135 entsprechend adaptiert wird. Dabei ist besonders denkbar, dass zusätzliche Betriebspunkte, an denen beispielsweise die Kupplungseinrichtung 135 sich in einem schleifenden Zustand befindet, ebenso angesteuert werden können. Auch ist die Kombination der Schaltzustände der Kupplungseinrichtung 135 zu dem eingekuppelten oder ausgekuppelten Zustand der Reibkupplung 10 frei wählbar.

Besonders vorteilhaft ist, wenn die Kupplungseinrichtung 135 derart geschaltet wird, dass beim Einkuppeln der Reibkupplung 10, bei dem die größte Reibungswärme erzeugt wird, die Zirkulation der Kühlflüssigkeit 30 am stärksten ist und somit die Drehzahl der Abbremseinrichtung 15 am geringsten ist. Die Zirkulation der Kühlflüssigkeit 30 ist am stärksten, wenn die Trägerscheibe 125 mit der Abbremseinrichtung 15 steht.

Auch ist denkbar, dass die Kupplungseinrichtung 135 einen Freilauf aufweist, um ein reibungsarmes Mit-Rotieren der Abbremseinrichtung 15 an der Trägerscheibe 125 in der Zirkulation der Kühlflüssigkeit 30 zu ermöglichen und so den Wirkungsgrad der Reibkupplung 10 besonders hoch zu halten.

Die in der Ausführungsform gezeigte Ausgestaltung der Abbremseinrichtung 15 ist beispielhaft. Selbstverständlich ist auch denkbar, dass die Bremsstruktur 130 der Abbremseinrichtung 15 andersartig ausgebildet ist. Beispielsweise ist denkbar, dass anstatt der Schaufel 145 beispielsweise Ausbuchtungen in der Trägerscheibe 125 als Bremsstruktur 130 vorgesehen sind. Ferner kann auch auf die Bremsstruktur 130 verzichtet werden. Auch ist denkbar, dass die Ausgestaltung der Schaufeln 145 der Bremsstruktur 130 andersartig ist.

Eine besonders gute Kühlung des Lamellenpakets 60 wird bereitgestellt, wenn der Reibkupplung 10, 300, 400 radial innenseitig zusätzlich abgekühlte Kühlflüssigkeit 30 über einen Vorlauf 410 kommend von einem Kühler oder dem hydrodynamischen Wandler in die Reibkupplung 10, 300, 400 bereitgestellt wird. Dadurch kann die Temperatur der Kühlflüssigkeit 30 und des Lamellenpakets 60 weiter reduziert werden. Durch einen Rücklauf 415, der ebenfalls radial innenseitig im Bereich der Nabe 81 erfolgt, kann erwärmte Kühlflüssigkeit 30 aus der Reibkupplung 10, 300, 400 gefördert werden und beispielsweise in einen Ölkühler zur Abkühlung weitergeleitet werden.

Die oben genannten Reibkupplungen 10, 300, 400 eignen sich insbesondere als Reibkupplungen zur Überbrückung eines Wandlergetriebes. Selbstverständlich ist auch denkbar, dass die Reibkupplungen 10, 300, 400 auch als nasse Doppelkupplungen, nasse Anfahrkupplungen oder nasse Lastschaltkupplungen ausgebildet sind. Wesentlich dabei ist jedoch, dass die Kühlflüssigkeit 30 vorgesehen ist, um die Reibkupplungen 10, 300, 400 abzukühlen. Besonders vorteilhaft ist hierbei, wenn die Reibkupplungen 10, 300, 400 als Dreikanalkupplung, also aufweisend zwei Kanäle zum Ein- und Ausströmen der Kühlflüssigkeit 30 und einen separaten Kanal zur Steuerung der Kompressionseinrichtung 100, ausgebildet sind.

Auch ist denkbar, dass die Steuereinrichtung 185 die Kupplungseinrichtung 135 anstatt der Temperatur der Kühlflüssigkeit 30 in Abhängigkeit einer Temperatur der Reiblamellen 50, 55 und/oder in Abhängigkeit eines Verfahrwegs des Kolbens 115 der Kompressionseinrichtung 100 steuert.

Durch die oben beschriebenen Reibkupplungen 10, 300, 400 wird insgesamt eine besonders hohe Kühlung der Reiblamellen unabhängig von der Drehzahldifferenz zwischen Eingangsseite und Ausgangsseite bereitgestellt. Dies ist insbesondere von Vorteil, da auch nach mehreren hochenergetischen Kupplungsvorgängen eine starke Kühlung durch die Kühlflüssigkeit bereitgestellt werden kann. Auch kann eine verbesserte Kühlung des Lamellenpakets 60 bei geringen Drehzahldifferenzen zwischen der Eingangsseite 35 und der Ausgangsseite 40 bereitgestellt werden, durch eine (schaltbare) Erhöhung der Drehzahldifferenz zwischen Abbremseinrichtung 60 und der Kühlflüssigkeit 30.

### Bezugszeichenliste

- 10: Reibkupplung
- 15: Abbremseinrichtung für die Kühlflüssigkeit
- 20: Kupplungsgehäuse
- 25: Nassraum
- 30: Kühlflüssigkeit
- 35: Eingangsseite
- 40: Ausgangsseite
- 45: Drehachse
- 50: erste Reiblamelle
- 55: zweite Reiblamelle
- 60: Lamellenpacket
- 65: Innenverzahnung
- 70: Aussenverzahnung
- 75: Außenlamellenträger
- 80: Innenlamellenträger
- 81: Nabe
- 85: Innenverzahnung des Außenlamellenträgers
- 90: Außenverzahnung des Innenlamellenträgers
- 95: Öffnung
- 100: Kompressionseinrichtung
- 105: Druckraum
- 110: Drucköl
- 115: Kolben
- 120: Dichtelement
- 125: Trägerscheibe
- 130: Bremsstruktur
- 135: Kupplungseinrichtung
- 140: Ausnehmung
- 145: Schaufel
- 150: Stirnseite
- 155: Tangente
- 160: Halbkreisförmiger Abschnitt
- 165: Geradliniger Abschnitt
- 170: Festes Ende
- 180: Erste Verbindung
- 185: Steuereinrichtung
- 190: Temperatursensor
- 195: Zweite Verbindung
- 200: Speicher
- 205: Leitradstutzen
- 210: Zeiterfassungseinrichtung
- 300: Reibkupplung
- 305: Kolben
- 310: Druckraum
- 315: Reibfläche
- 325: Steuerventil
- 320: Verbindungskanal
- 400: Reibkupplung
- 405: Steg
- 410: Vorlauf
- 415: Rücklauf

## Patentansprüche

1. Reibkupplung (10; 300; 400) umfassend:
- eine Eingangsseite (35) und eine Ausgangsseite (40), die drehbar um eine Drehachse (45) angeordnet sind, sowie
- einen Nassraum (25), der mit einer Kühlflüssigkeit (30) befüllbar ist, wobei in dem Nassraum (25)
-- ein erster Reibpartner (50), der mit der Eingangsseite (35) drehmomentschlüssig verbunden ist,
-- ein zweiter Reibpartner (55), der mit der Ausgangsseite (40) drehmomentschlüssig verbunden ist,
-- und eine Kompressionseinrichtung (100), die ausgebildet ist, eine axiale Kompression des ersten Reibpartner (50) und des zweiten Reibpartners (55) zur Erzeugung eines Drehmomentschlusses zwischen der Eingangsseite (35) (15) und der Ausgangsseite (40) (20) bereitzustellen, angeordnet sind, wobei eine Abbremseinrichtung (15) für die Kühlflüssigkeit (30) in dem Nassraum (25) vorgesehen ist, die axial angrenzend an den ersten und/oder zweiten Reibpartner (50, 55) angeordnet ist,
- wobei die Abbremseinrichtung (15) ausgebildet ist, eine Umfangsgeschwindigkeit der Kühlflüssigkeit (30) zu reduzieren, **dadurch gekennzeichnet, dass** eine Kupplungseinrichtung (135) vorgesehen ist, wobei die Kupplungseinrichtung (135) wenigstens einen ersten und einen zweiten Schaltzustand umfasst, wobei in dem ersten Schaltzustand die Kupplungseinrichtung (135) die Abbremseinrichtung (15) drehmomentschlüssig mit einer weiteren Komponente der Reibkupplung (10; 300; 400) verbindet und in einem zweiten Schaltzustand die Kupplungseinrichtung (135) ausrückt, um eine Drehmomentübertragung zwischen der Abbremseinrichtung (15) und der weiteren Komponente (40, 205) zumindest teilweise zu unterbrechen.

2. Reibkupplung (10; 300; 400) nach Anspruch 1, **dadurch gekennzeichnet, dass** die Abbremseinrichtung (15) eine Trägerscheibe (125) aufweist, wobei an der Trägerscheibe (125) eine Bremsstruktur (130) vorgesehen ist, wobei die Bremsstruktur (130) an einer dem ersten und/oder zweiten Reibpartner (50, 55) zugewandten Stirnseite (150) der Trägerscheibe (125) angeordnet ist.

3. Reibkupplung (10; 300; 400) nach Anspruch 2, wobei die Bremsstruktur (130) wenigstens eine Schaufel (145) umfasst, wobei die Schaufel (145) insbesondere schräg oder senkrecht zu einer Tangente (155) an die Trägerscheibe (125) angeordnet ist, so dass die Schaufel (145) die Kühlflüssigkeit (30) radial nach innen fördert.

4. Reibkupplung (10; 300; 400) nach einem der Ansprüche 1 bis 3, **dadurch gekennzeichnet, dass** die weitere Komponente die Ausgangsseite (40) der Reibkupplung (10; 300; 400) oder eine drehfeste Komponente (205) eines Antriebsstrangs, insbesondere ein Leitradstutzen (205) eines hydrodynamischen Wandlers, ist.

5. Reibkupplung (10; 300; 400) nach einem der Ansprüche1 bis 4, **dadurch gekennzeichnet, dass** eine Steuereinrichtung (185) vorgesehen ist, die ausgebildet ist, die Kupplungseinrichtung (135) zur Schaltung der wenigstens zwei Schaltzustände anzusteuern.

6. Reibkupplung (10; 300; 400) nach Anspruch 5, **dadurch gekennzeichnet, dass** die Steuereinrichtung (185) ausgebildet ist, eine Temperatur der Kühlflüssigkeit (30) und/oder wenigstens eines Reibpartners (50, 55) und/oder einen Verfahrweg der Kompressionseinrichtung (100) zu erfassen, wobei bei Überschreiten oder Unterschreiten eines vordefinierten Schwellenwerts der erfassten Temperatur der Kühlflüssigkeit (30) und/oder des wenigstens einen Reibpartners (50, 55) und/oder des Verfahrwegs, die Steuereinrichtung (185) die Kupplungseinrichtung (135) zum Wechsel des Schaltzustands der Kupplungseinrichtung (135) ansteuert.

7. Reibkupplung (10; 300; 400) nach Anspruch 6, **dadurch gekennzeichnet, dass** die Steuereinrichtung (185) eine Zeiterfassungseinrichtung (210) umfasst, wobei die Zeiterfassungseinrichtung (210) ausgebildet ist, bei Überschreiten des Schwellenwerts eine Zeiterfassung zu starten und wobei die Steuereinrichtung (185) ausgebildet ist, bei Ablauf eines durch die Zeiterfassungseinrichtung (210) erfassten vordefinierten Zeitintervalls die Kupplungseinrichtung (135) zum Wechsel des Schaltzustands der Kupplungseinrichtung (135) anzusteuern.

8. Reibkupplung (10; 300; 400) nach einem der Ansprüche 4 bis 7, **dadurch gekennzeichnet, dass** Kompressionseinrichtung (100) einen ersten Druckkolben (115) und einen vom ersten Druckkolben (115) begrenzten ersten Druckraum (105) aufweist, wobei die Kupplungseinrichtung (135) einen zweiten Druckkolben (305) umfasst, der einen zweiten Druckraum begrenzt, wobei der erste und der zweite Druckraum mit einem Drucköl (110) befüllbar sind, wobei der zweite Druckkolben (305) ausgebildet ist, mittels des Drucköls (110) verschoben zu werden, um einen Drehmomentschluss zwischen der Abbremseinrichtung (15) und der weiteren Komponente (40, 205) bereitzustellen, wobei der erste und der zweite Druckraum (105, 310) fluidisch über einen Verbindungskanal (320) verbunden sind, wobei insbesondere in dem Verbindungskanal (320) ein Steuerventil (325) der Steuereinrichtung (185) angeordnet ist, das ausgebildet ist, den Verbindungskanal (320) zu öffnen oder zu schließen, wobei insbesondere das Steuerventil (325) als temperatursensitives Ventil ausgebildet ist.

9. Reibkupplung (10; 300; 400) nach einem der Ansprüche 1 bis 7, **dadurch gekennzeichnet, dass** die Kompressionseinrichtung (100) einen Druckkolben (115) und einen Druckraum (105) umfasst, der durch den Druckkolben (115) begrenzt wird, wobei der Druckraum (105) mit einem Drucköl (110) befüllbar ist, um den Druckkolben (115) axial zu verschieben und die Reibpartner (50, 55) axial zu komprimieren, wobei der Druckkolben (115) stirnseitig auf einer dem Druckraum (105) abgewandten Stirnseite ein Verbindungselement (405) aufweist, das die Kupplungseinrichtung (135) mit dem Druckkolben (115) koppelt, wobei bei einer axialen Verschiebung des Druckkolbens (115) der Kompressionseinrichtung (100) die Kupplungseinrichtung (135) betätigt wird.

## Claims

1. Friction clutch (10; 300; 400) comprising:
- an input side (35) and an output side (40) which are arranged so as to be rotatable about a rotational axis (45), and
- a wet space (25) which can be filled with a cooling fluid (30), wherein arranged in the wet space (25) are
-- a first friction partner (50) which is connected to the input side (35) in a torque-locking manner,
-- a second friction partner (55) which is connected to the output side (40) in a torque-locking manner,
-- and a compression device (100) which is designed to make available an axial compression of the first friction partner (50) and of the second friction partner (55) in order to generate torque locking between the input side (35) (15) and the output side (40) (20),
wherein a brake device (15) is provided for the cooling fluid (30) in the wet space (25), which brake device (15) is arranged axially adjoining the first and/or second friction partners (50, 55),
- wherein the brake device (15) is designed to reduce a circumferential speed of the cooling fluid (30),
**characterized in that**
a clutch device (135) is provided, wherein the clutch device (135) comprises at least a first and a second shift state, wherein in the first shift state the clutch device (135) connects the brake device (15) in a torque-locking fashion to a further component of the friction clutch (10; 300; 400), and in the second shift state disengages the clutch device (135) in order to at least partially interrupt a transmission of torque between the brake device (15) and the further component (40, 205).

2. Friction clutch (10; 300; 400) according to Claim 1, **characterized in that** the brake device (15) has a carrier disc (125), wherein a brake structure (130) is provided on the carrier disc (125), wherein the brake structure (130) is arranged on an end side (150) of the carrier disc (125), facing the first and/or second friction partner (50, 55).

3. Friction clutch (10; 300; 400) according to Claim 2, wherein the brake structure (130) comprises at least one blade (145), wherein the blade (145) is arranged, in particular, obliquely or perpendicularly with respect to a tangent (155) to the carrier disc (125), with the result that the blade (145) feeds the cooling fluid (30) radially inward.

4. Friction clutch (10; 300; 400) according to one of Claims 1 to 3, **characterized in that** the further component is the output side (40) of the friction clutch (10; 300; 400) or a rotationally fixed component (205) of a drive train, in particular a guide wheel connector (205) of a hydrodynamic converter.

5. Friction clutch (10; 300; 400) according to one of Claims 1 to 4, **characterized in that** a control device (185) is provided which is designed to actuate the clutch device (135) to shift the at least two shift states.

6. Friction clutch (10; 300; 400) according to Claim 5, **characterized in that** the control device (185) is designed to detect a temperature of the cooling fluid (30) and/or at least one friction partner (50, 55) and/or a travel distance of the compression device (100), wherein when a predefined threshold value of the detected temperature of the cooling fluid (30) and/or of the at least one friction partner (50, 55) and/or of the travel distance is exceeded or undershot, the control device (185) actuates the clutch device (135) to change the shift state of the clutch device (135).

7. Friction clutch (10; 300; 400) according to Claim 6, **characterized in that** the control device (185) comprises a timing device (210), wherein the timing device (210) is designed to start a timing operation when the threshold value is exceeded, and wherein the control device (185) is designed to actuate the clutch device (135) to change the shift state of the clutch device (135) when a predefined time interval detected by the timing device (210) expires.

8. Friction clutch (10; 300; 400) according to one of Claims 4 to 7, **characterized in that** compression device (100) has a first pressure piston (115) and a first pressure space (105) which is bounded by the first pressure piston (115), wherein the clutch device (135) comprises a second pressure piston (305) which bounds a second pressure space, wherein the first and second pressure spaces can be filled with a pressurized oil (110), wherein the second pressure piston (305) is designed to be shifted by means of the pressurized oil (110), in order to make available torque locking between the brake device (15) and the further component (40, 205), wherein the first and second pressure spaces (105, 310) are fluidically connected via a connecting duct (320), wherein in particular a control valve (325) of the control device (185) is arranged in the connecting duct (320), which control valve (325) is designed to open or close the connecting duct (320), wherein in particular the control valve (325) is embodied as a temperature-sensitive valve.

9. Friction clutch (10; 300; 400) according to one of Claims 1 to 7, **characterized in that** the compression device (100) comprises a pressure piston (115) and a pressure space (105) which is bounded by the pressure piston (115), wherein the pressure space (105) can be filled with a pressurized oil (110) in order to move the pressure piston (115) axially and to compress the friction partners (50, 55) axially, wherein the pressure piston (115) has at the end side a connecting element (405) on an end side facing away from the pressure space (105), which connecting element (405) couples the clutch device (135) to the pressure piston (115), wherein the clutch device (135) is activated when the pressure piston (115) of the compression device (100) is moved axially.

## Revendications

1. Embrayage à frottement (10; 300; 400) comportant :
un côté d'entrée (35) et un côté de sortie (40) disposés de manière à pouvoir tourner autour d'un axe de rotation (45), ainsi que
un espace mouillé (45) apte à être rempli d'un liquide de refroidissement (30), avec dans l'espace mouillé (45) :
un premier partenaire de frottement (50) relié au côté d'entrée (35) à entraînement par un couple de rotation,
un deuxième partenaire de frottement (55) relié au côté de sortie (40) à entraînement par un couple de rotation,
et un dispositif de compression (100) configuré pour réaliser une compression axiale du premier partenaire de frottement (50) et du deuxième partenaire de frottement (55) en vue de former un entraînement par couple de rotation entre le côté d'entrée (35) (15) et le côté de sortie (40) (20),
un dispositif de freinage (15) du liquide de refroidissement (30) étant prévu dans l'espace mouillé (25) et étant disposé de manière à être axialement adjacent au premier et/ou au deuxième partenaire de frottement (50, 55),
le dispositif de freinage (15) étant configuré pour réduire la vitesse périphérique du liquide de refroidissement (30),
**caractérisé en ce que**
un dispositif d'embrayage (135) est prévu,
**en ce que** le dispositif d'embrayage (135) comporte au moins un premier et un deuxième état de commutation,
**en ce que** le dispositif d'embrayage (135) relie le dispositif de freinage (15) à un autre composant de l'embrayage à frottement (10; 300; 400) à entraînement par un couple de rotation dans le premier état de commutation et
**en ce que** le dispositif d'embrayage (35) recule dans le deuxième état de commutation pour interrompre au moins en partie la transmission d'un couple de rotation entre le dispositif de freinage (15) et l'autre composant (40, 205).

2. Embrayage à frottement (10; 300; 400) selon la revendication 1, **caractérisé en ce que** le dispositif de freinage (15) présente un disque de support (125), une structure de freinage (130) étant prévue sur le disque de support (125), la structure de freinage (130) étant disposée sur un côté frontal (150) du disque de support (125) tourné vers le premier et/ou le deuxième partenaire de frottement (50, 55).

3. Embrayage à frottement (10; 300; 400) selon la revendication 2, dans lequel la structure de freinage (130) comporte au moins une aube (145), l'aube (145) étant disposée en particulier obliquement ou perpendiculairement à une tangente (155) au disque de support (125) de telle sorte que l'aube (145) refoule le liquide de refroidissement (30) radialement vers l'intérieur.

4. Embrayage à frottement (10; 300; 400) selon la revendication selon l'une des revendications 1 à 3, **caractérisé en ce que** l'autre composant est le côté de sortie (40) de l'embrayage à frottement (10; 300; 400) ou un composant (205) fixe en rotation d'un train d'entraînement, en particulier une tubulure (205) de roue directrice d'un convertisseur hydrodynamique.

5. Embrayage à frottement (10; 300; 400) selon la revendication selon l'une des revendications 1 à 4, **caractérisé en ce qu'**un dispositif de commande (185) est prévu et configuré pour commander le dispositif d'embrayage (135) en vue de le commuter dans les deux ou plusieurs états de commutation.

6. Embrayage à frottement (10; 300; 400) selon la revendication 5, **caractérisé en ce que** le dispositif de commande (185) est configuré pour saisir la température du liquide de refroidissement (30) et/ou d'au moins un partenaire de frottement (50, 55) et/ou un parcours de déplacement du dispositif de compression (100), le dispositif de commande (185) commandant le dispositif d'embrayage (135) de manière à modifier l'état de commutation du dispositif d'embrayage (135) lorsqu'une valeur de seuil préalablement définie du parcours de déplacement et/ou de la température saisie sur le liquide de refroidissement (30) et/ou sur le ou les partenaires de frottement (50, 55) est dépassée ou n'est pas atteinte.

7. Embrayage à frottement (10; 300; 400) selon la revendication 6, **caractérisé en ce que** le dispositif de commande (185) comporte un dispositif (210) de saisie du temps, le dispositif (210) de saisie du temps étant configuré pour lancer une saisie de temps lorsque la valeur de seuil est dépassée, le dispositif de commande (185) étant configuré pour commander le dispositif d'embrayage (135) en vue de modifier l'état de commutation du dispositif d'embrayage (135) lorsqu'un intervalle de temps prédéfini saisi par le dispositif (210) de saisie du temps s'est écoulé.

8. Embrayage à frottement (10; 300; 400) selon la revendication selon l'une des revendications 4 à 7, **caractérisé en ce que** le dispositif de compression (100) présente un premier piston de poussée (115) et un premier espace sous pression (105) délimité par le premier piston de poussée (115), le dispositif d'embrayage (135) comportant un deuxième piston de poussée (205) qui délimite un deuxième espace sous pression, le premier et le deuxième espace sous pression pouvant être remplis d'une huile sous pression (110), le deuxième piston de poussée (305) étant configuré pour être déplacé au moyen de l'huile sous pression (110) en vue d'appliquer un couple de rotation entre le dispositif de freinage (15) et l'autre composant (40, 205), le premier et le deuxième espace sous pression (105, 310) étant reliés à écoulement par un canal de liaison (320), une soupape pilote (325) du dispositif de commande (185) étant disposée dans le canal de liaison (320) et étant configurée pour ouvrir ou fermer le canal de liaison (320), la soupape de commande (325) étant en particulier configurée comme soupape sensible à la température.

9. Embrayage à frottement (10; 300; 400) selon la revendication selon l'une des revendications 1 à 7, **caractérisé en ce que** le dispositif de compression (100) présente un piston de poussée (115) et un espace sous pression (105) délimité par le piston de poussée (115), l'espace sous pression (105) pouvant être rempli d'huile sous pression (110) en vue de déplacer axialement le piston de poussée (115) et comprimer axialement les partenaires de frottement (50, 55), le piston de poussée (115) présentant frontalement, sur un côté frontal non tourné vers l'espace sous pression (105) un élément de liaison (405) qui accouple le dispositif d'embrayage (135) au piston de poussée (115), le dispositif d'embrayage (135) étant actionné en cas de déplacement axial du piston de poussée (115) du dispositif de compression (100).
